# EUROPEAN PATENT APPLICATION

(11) **EP 4 661 132 A1**
(43) Date of publication of application: **10.12.2025**
(21) Application number: 24750056.4
(22) Date of filing: 23.01.2024
(51) Int. Cl.: H01M 10/052, H01M 4/36, H01M 4/48, H01M 4/485, H01M 4/525, H01M 10/0569

(54) **BATTERY**

(30) Priority: 31.01.2023 JP 2023013530
(71) Applicant: Panasonic Intellectual Property Management Co., Ltd., Kadoma-shi, Osaka 571-0057 (JP)
(72) Inventor: MIYAMOTO, Yumi, Kadoma-shi, Osaka 571-0057 (JP); MURATA, Mitsuhiro, Kadoma-shi, Osaka 571-0057 (JP); OTSUKA, Yu, Kadoma-shi, Osaka 571-0057 (JP)
(74) Representative: Novagraaf International SA
(86) International application number: PCT/JP2024/001911
(87) International publication number: WO 2024/162105

(57) **Abstract**

A battery 100 of the present disclosure includes a positive electrode 23, a negative electrode 26, a separator 27, and an electrolyte solution 29. The positive electrode 23 includes, as a positive electrode active material, a lithium oxide in which a transition metal is dissolved to form a solid solution, the lithium oxide having an antifluorite crystal structure. The electrolyte solution 29 includes a solvent mixture of a fluorinated cyclic ester and an additional solvent, and a concentration of the fluorinated cyclic ester in the electrolyte solution 29 is 75 volume% or less. The concentration of the fluorinated cyclic ester in the electrolyte solution 29 may be 2 volume% or more and 5 volume% or less.

## Description

### TECHNICAL FIELD

The present invention relates to a battery.

### BACKGROUND ART

As described in Patent Literature 1, it has been known that a redox reaction between lithium oxide (Li₂O) and lithium peroxide (Li₂O₂) can be applied to a secondary battery. However, there has been a technical problem of poor electron conductivity of lithium oxide and lithium peroxide and a large overpotential.

Patent Literature 2 discloses that a charging overpotential can be decreased by dissolving a transition metal into a crystal structure of lithium oxide to form a solid solution.

### CITATION LIST

### Patent Literature

Patent Literature 1: JP 4554935 B2
Patent Literature 2: JP 6179944 B2

### SUMMARY OF INVENTION

### Technical Problem

The conventional techniques leave room for improvement in terms of cycle characteristics of batteries.

### Solution to Problem

The present disclosure provides a battery including: a positive electrode; a negative electrode; a separator; and an electrolyte solution, wherein
the positive electrode includes, as a positive electrode active material, a lithium oxide in which a transition metal is dissolved to form a solid solution, the lithium oxide having an antifluorite crystal structure,
the electrolyte solution includes a solvent mixture of a fluorinated cyclic ester and an additional solvent, and
a concentration of the fluorinated cyclic ester in the electrolyte solution is 75 volume% or less.

### Advantageous Effects of Invention

The battery according to the technique of the present disclosure can have improved cycle characteristics.

### BRIEF DESCRIPTION OF DRAWINGS

FIG. 1 is a cross-sectional view showing a schematic configuration of a battery according to one embodiment of the present disclosure.
FIG. 2A shows X-ray diffraction patterns of positive electrode active materials including Co as the transition metal M1.
FIG. 2B shows X-ray diffraction patterns of positive electrode active materials including Cu as the transition metal M1.
FIG. 2C shows X-ray diffraction patterns of positive electrode active materials including Fe as the transition metal M1.
FIG. 3A shows a SEM image of a positive electrode active material of Sample 3.
FIG. 3B shows a SEM image of a positive electrode active material of Sample 17.
FIG. 4 is a graph showing charge-discharge curves of Sample 1 and Sample 14.
FIG. 5 is a graph on which calculation results for integrated intensity ratios I₂/I₁ and I₃/I₁ of positive electrode active materials of Samples 1 to 28 are plotted.

### DESCRIPTION OF EMBODIMENTS

### (Findings on which the present disclosure is based)

A battery having a higher theoretical capacity than those of conventional lithium-ion batteries can be obtained by using a redox reaction between lithium oxide and lithium peroxide. The theoretical capacity of this battery is 897 mAh per gram of lithium oxide. However, due to its nature as a peroxide, lithium peroxide which is generated during charging is unstable and may be decomposed by a reaction with an electrolyte solution. Furthermore, while conventional lithium-ion batteries are charged and discharged in the range from about 2.5 V to about 4.5 V (vs. Li/Li⁺), a battery including lithium oxide as a positive electrode active material is charged and discharged in the range from about 1.8 V to about 3.4 V (vs. Li/Li⁺). This is because oxygen gas will be generated at a higher charge potential. That is, the potential range for a battery including lithium oxide as a positive electrode active material differs from those for conventional lithium-ion batteries. As just described, a positive electrode active material including lithium oxide has different characteristics from those of positive electrode active materials included in conventional lithium-ion batteries. Therefore, specific conditions, such as the composition of an electrolyte solution, for improving the cycle characteristics have been scarcely uncovered.

An embodiment of the present disclosure will be described hereinafter with reference to the drawings. The present disclosure is not limited to the following embodiment.

### (Embodiment)

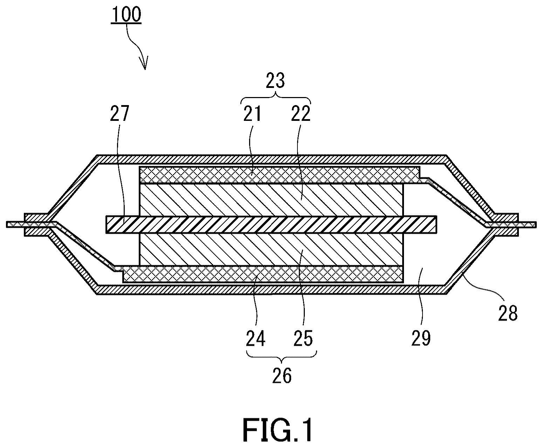

FIG. 1 is a cross-sectional view showing a schematic configuration of a battery 100 according to an embodiment of the present disclosure. The battery 100 includes a positive electrode 23, a negative electrode 26, an electrolyte solution 29, a separator 27, and an outer package 28. The positive electrode 23 includes a positive electrode current collector 21 and a positive electrode active material layer 22. The positive electrode active material layer 22 is disposed on the positive electrode current collector 21. The negative electrode 26 includes a negative electrode current collector 24 and a negative electrode active material layer 25. The negative electrode active material layer 25 is disposed on the negative electrode current collector 24. The separator 27 is disposed between the positive electrode 23 and the negative electrode 26. The positive electrode 23 and the negative electrode 26 face each other with the separator 27 in between. The positive electrode 23, the negative electrode 26, the separator 27, and the electrolyte solution 29 are contained in the outer package 28. The battery 100 is typically a secondary battery.

The positive electrode active material layer 22 includes, as a positive electrode active material, a lithium oxide in which a transition metal M1 is dissolved to form a solid solution (a lithium oxide doped with the transition metal M1). The lithium oxide in which the transition metal M1 is dissolved to form a solid solution has an antifluorite crystal structure. In an antifluorite crystal structure, a positional relationship between a cation and an anion is reversed relative to a fluorite structure. The reason why the lithium oxide in which the transition metal M1 is dissolved has an enhanced electron conductivity is not perfectly clear, but is presumably as follows. When the transition metal M1 is dissolved into lithium oxide, the transition metal M1 enters a lithium site, and oxygen atoms are tetrahedrally coordinated around the transition metal M1 to form an outer-orbital complex. For example, in the case of cobalt, a plurality of unpaired electrons are present in the 3d orbital, and these unpaired electrons impart electron conductivity to the lithium oxide. In addition, the valence of lithium is +1; assuming that the valence of the transition metal M1 is +3, two more lithium atoms other than the lithium atom substituted by the transition metal M1 are released from the crystal to maintain charge neutrality in the crystal, so that two holes are formed. These holes serve as a conduction path of lithium ions, enhancing the ion conductivity of the lithium oxide. The lithium oxide in which the transition metal M1 is dissolved can be a substitutional solid solution.

Reaction formulae in charging and discharging of the battery 100 are as follows.
Reaction in the positive electrode 23: Li₂O₂ + 2Li⁺ + 2e⁻ ⇔ 2Li₂O
Reaction in the negative electrode 26: Li ⇔ Li⁺ + e⁻

The transition metal M1 is not limited to a particular one as long as the transition metal M1 can be dissolved into lithium oxide to form a solid solution. The transition metal M1 may be, for example, an element selected from Periods 4 and 5 and Groups 3 to 11 in the periodic table. Specifically, the transition metal M1 may include at least one selected from the group consisting of Fe, Co, and Cu. The transition metal M1 may be Fe, Co, or Cu. These elements are desirable in terms of reducing an increase of the charging voltage of the battery 100 and enhancing the discharging voltage of the battery 100.

The lithium oxide in which the transition metal M1 is dissolved may have compositions represented by the following formulae (1a) and (1b) in a discharged state. According to quantum science calculation, it is desirable that α satisfy a relationship 0.0327 ≤ α ≤ 0.1484 in the case where the valence of the transition metal M1 is +3. It is desirable that α satisfy a relationship 0.0490 ≤ α ≤ 0.2224 in the case where the valence of the transition metal M1 is +2.
In the case where the valence of the transition metal M1 is +3: (Li_{(1-3α)}M1_{α})₂O (1a)
In the case where the valence of the transition metal M1 is +2: (Li_{(1-2α)}M1_{α})₂O (1b)

An amount of substance of lithium included in the positive electrode active material is defined as m₀ (mol). An amount of substance of the transition metal M1 included in the positive electrode active material is defined as m₁ (mol). A ratio (m₁/(m₀+m₁)) is, for example, 0.01 or more and 0.34 or less. An increase of the charging voltage of the battery 100 can be reduced and the discharging voltage of the battery 100 can be enhanced by adjusting the ratio (m₁/(m₀+m₁)) as appropriate.

The positive electrode current collector 21 is, for example, a sheet or film formed of a metal material, such as aluminum, an aluminum alloy, stainless steel, titanium, or a titanium alloy. The sheet or film may be porous or non-porous. Metal foil, metal mesh, or the like is used as the sheet or film. The surface of the positive electrode current collector 21 may be coated with a carbon material as a conductive auxiliary material.

The positive electrode active material layer 22 may include an additional material, such as a conductive additive, an ion conductor, or a binder.

The conductive additive and the ion conductor are used to decrease the resistance of the positive electrode 23. Examples of the conductive additive include a carbon material and a conductive polymer compound. Examples of the carbon material include carbon black, graphite, acetylene black, a carbon nanotube, a carbon nanofiber, graphene, fullerene, and graphite oxide. Examples of the conductive polymer compound include polyaniline, polypyrrole, and polythiophene. At least one selected from these conductive additives can be used.

Examples of the ion conductor include gel electrolytes such as polymethyl methacrylate, organic solid electrolytes such as polyethylene oxide, and inorganic solid electrolytes such as Li₇La₃Zr₂O₁₂. At least one selected from these ion conductors can be used.

The binder is used to enhance binding strength between the materials of the negative electrode 26. Examples of the binder include polymer materials, such as polyvinylidene fluoride, vinylidene fluoride-hexafluoropropylene copolymer, vinylidene fluoride-tetrafluoroethylene copolymer, polytetrafluoroethylene, carboxymethyl cellulose, polyacrylic acid, styrene-butadiene copolymer rubber, polypropylene, polyethylene, and polyimide. At least one selected from these binders can be used.

The negative electrode current collector 24 is, for example, a sheet or film formed of a metal material, such as stainless steel, nickel, a nickel alloy, copper, or a copper alloy. The sheet or film may be porous or non-porous. Metal foil, metal mesh, or the like is used as the sheet or film. The surface of the negative electrode current collector 24 may be coated with a carbon material as a conductive auxiliary material.

The negative electrode active material layer 25 may include a negative electrode active material capable of absorbing and releasing lithium. Examples of the negative electrode active material capable of absorbing and releasing lithium include lithium titanate, graphite, silicon, a silicon-including oxide, a zinc alloy, lithium metal, and a lithium alloy. At least one selected from these negative electrode active materials can be used. Lithium metal is more desirably used as the negative electrode active material. The theoretical capacity of the positive electrode active material according to the present disclosure is 897 mAh per gram of lithium oxide, which is at least three times as large as those of other conventional positive electrode active materials. Therefore, lithium metal is suitable as the negative electrode active material.

The negative electrode active material layer 25 may include an additional material, such as a conductive additive, an ion conductor, or a binder. As the conductive additive, the ion conductor, and the binder of the negative electrode active material layer 25 can also be used the materials that can be included in the positive electrode active material layer 22.

The positive electrode 23, the negative electrode 26, and the separator 27 may be impregnated with the electrolyte solution 29. An internal space of the outer package 28 may be filled with the electrolyte solution 29. Lithium ions can transfer between the positive electrode 23 and the negative electrode 26 through the action of the electrolyte solution 29.

In the present embodiment, the electrolyte solution 29 includes a solvent mixture. The solvent mixture includes a fluorinated cyclic ester and an additional solvent. A concentration of the fluorinated cyclic ester in the electrolyte solution 29 is 75 volume% or less. When the electrolyte solution 29 includes 75 volume% or less of the fluorinated cyclic ester, the cycle characteristics of the battery 100 can be improved. The reason is not perfectly clear, but it is inferred that the fluorinated cyclic ester and/or a reaction product thereof forms a coating on a surface of the active material to prevent direct contact between the active material and the electrolyte solution 29 and thereby reduces decomposition of the electrolyte solution 29. For example, the fluorinated cyclic ester may undergo reductive polymerization to form a lithium ion conductive polymer, which may form a coating covering the active material. The coating potentially includes lithium fluoride derived from the fluorine in the fluorinated cyclic ester. The lithium fluoride can enhance the active material protection effect of the coating.

The concentration of the fluorinated cyclic ester in the electrolyte solution 29 may be 2 volume% or more and 10 volume% or less, or 2 volume% or more and 5 volume% or less. The improving effect on the cycle characteristics of the battery 100 is increased by adjusting the concentration of the fluorinated cyclic ester as appropriate.

The fluorinated cyclic ester is, for example, in a liquid state at 25°C. It is desirable that the fluorinated cyclic ester is compatible with the additional solvent. In this case, the electrolyte solution 29 can have a uniform composition, and thus the improving effect on the cycle characteristics of the battery 100 is easily achieved.

The fluorinated cyclic ester may include a fluorinated cyclic carbonate. In this case, the improving effect on the cycle characteristics of the battery 100 is easily achieved. The fluorinated cyclic carbonate has a structure in which at least one hydrogen atom in a cyclic carbonate is substituted by a fluorine atom. Examples of the cyclic carbonate include ethylene carbonate, propylene carbonate, butylene carbonate, trimethylene carbonate, and vinylene carbonate. The fluorinated cyclic ester may have a structure in which at least one hydrogen atom in lactone, such as γ-butyrolactone, β-propiolactone, or δ-valerolactone, is substituted by a fluorine atom.

The fluorinated cyclic ester may include fluoroethylene carbonate. In this case, the improving effect on the cycle characteristics of the battery 100 is easily achieved.

The additional solvent included in the solvent mixture is typically a non-aqueous solvent. As the non-aqueous solvent can be used, for example, a cyclic carbonate, a chain carbonate, a cyclic ether, a chain ether, a cyclic ester, a chain ester, or a nitrile. Examples of the cyclic carbonate include ethylene carbonate, propylene carbonate, and butylene carbonate. Examples of the chain carbonate include dimethyl carbonate, ethyl methyl carbonate, and diethyl carbonate. Examples of the cyclic ether include tetrahydrofuran, 1,4-dioxane, and 1,3-dioxolane. Examples of the chain ether include 1,2-dimethoxyethane and 1,2-diethoxyethane. Examples of the cyclic ester include γ-butyrolactone. Examples of the chain ester include methyl acetate. Examples of the nitrile include acetonitrile. At least one selected from these non-aqueous solvents can be used.

The electrolyte solution 29 may further include a lithium salt. Examples of the lithium salt include lithium hexafluorophosphate (LiPF₆), lithium tetrafluoroborate (LiBF₄), lithium perchlorate (LiClO₄), lithium bis(fluorosulfonyl)imide (LiFSI), lithium bis(trifluoromethanesulfonyl)imide (LiTFSI), lithium bisperfluoroethylsulfonylimide (LiN(SO₂C₂F₅)₂), LiAsF₆, LiCF₃SO₃, and lithium difluoro(oxalato)borate. At least one selected from these lithium salts can be used.

The electrolyte solution 29 may include a gel electrolyte and/or an ionic liquid.

The gel electrolyte can be a material obtained by impregnating a polymer material with the electrolyte solution 29. Examples of the polymer material include polyethylene oxide, polyacrylonitrile, polyvinylidene fluoride, polymethyl methacrylate, and a polymer having an ethylene oxide bond.

Examples of a cation of the ionic liquid include an aliphatic chain quaternary cation, an aliphatic cyclic ammonium, and a nitrogen-containing heterocyclic aromatic cation. Examples of the aliphatic chain quaternary cation include tetraalkylammonium and tetraalkylphosphonium. Examples of the aliphatic cyclic ammonium include pyrrolidiniums, morpholiniums, imidazoliniums, tetrahydropyrimidiniums, piperaziniums, and piperidiniums. Examples of the nitrogen-containing heterocyclic aromatic cation include pyridiniums and imidazoliums. Examples of an anion of the ionic liquid include PF₆⁻, BF₄⁻, SbF₆⁻, AsF₆⁻, SO₃CF₃⁻, N(SO₂F)₂⁻, N(SO₂CF₃)₂⁻, N(SO₂C₂F₅)₂, N(SO₂CF₃)(SO₂C₄F₉)⁻, and C(SO₂CF₃)₃⁻. The ionic liquid may include a lithium salt.

The separator 27 is an electrolyte layer having lithium ion conductivity. The material of the separator 27 is not limited to a particular material as long as the separator 27 allows lithium ions to pass through. The material of the separator 27 can be at least one selected from the group consisting of a solid electrolyte, a gel electrolyte, an ion-exchange resin membrane, a semipermeable membrane, or a porous membrane. In the case where the separator 27 is formed of any of these materials, the safety of the battery 100 can be sufficiently ensured. Examples of the solid electrolyte include a sulfide solid electrolyte such as Li₂S-P₂S₅ and an oxide solid electrolyte such as Li₇La₃Zr₂O₁₂ (LLZ). Examples of the gel electrolyte include a gel electrolyte including a fluorine resin such as PVdF. Examples of the ion-exchange resin membrane include a cation-exchange membrane and an anion-exchange membrane. Examples of the porous membrane include a porous polyolefin resin membrane and a porous membrane formed of glass paper obtained by weaving a glass fiber into a non-woven fabric.

The outer package 28 is formed, for example, of a material obtained by laminating metal foil, such as aluminum foil, with a resin film, such as a PET film. The outer package 28 may be a container made of a resin or a metal.

The shape of the battery 100 is not limited to a stacked type. Other examples of the shape of the battery 100 include a coin type, a cylindrical type, a prismatic type, a sheet type, a button type, and a flat type.

Next, the positive electrode active material will be described in more details.

The positive electrode active material may include a transition metal oxide including a transition metal M2 in addition to the lithium oxide in which the transition metal M1 is dissolved to form a solid solution. Owing to the transition metal oxide included in the positive electrode active material, an increase of the charging voltage of the battery 100 is reduced and the discharging voltage of the battery 100 is enhanced.

The transition metal oxide including the transition metal M2 has a crystal structure different from the crystal structure of the lithium oxide in which the transition metal M1 is dissolved. The transition metal oxide including the transition metal M2 can include a double oxide including lithium and the transition metal M2. A crystal structure of the double oxide may be different from that of the lithium oxide. The transition metal oxide including the transition metal M2 may be free of lithium. The transition metal oxide can include a metal oxide including, as its only metal element, the transition metal M2. The transition metal oxide including the transition metal M2 may include at least one selected from the group consisting of the double oxide including lithium and the transition metal M2 and the metal oxide including the transition metal M2 as its only metal element.

The transition metal M2 may be, for example, an element selected from Periods 4 and 5 and Groups 3 to 11 in the periodic table. The transition metal M2 includes, for example, at least one selected from the group consisting of Fe, Co, and Cu. The transition metal M2 may be Fe, Co, or Cu. These elements are desirable in terms of reducing an increase of the charging voltage of the battery 100 and enhancing the discharging voltage of the battery 100.

The transition metal M2 may be the same as or different from the transition metal M1 dissolved in a crystal of the lithium oxide. The transition metal M1 and the transition metal M2 are typically the same element or the same elements. The transition metals M1 and M2 may be the same element. In the case where the transition metals M1 and M2 are the same element, it is easy to control the composition of the positive electrode active material. Other advantages in that case are easy production and reduction in raw material cost. The transition metal oxide may be a residue of a raw material used to dissolve the transition metal M1 into lithium oxide to form a solid solution, or may be a by-product generated in the process of synthesizing the positive electrode active material.

When the positive electrode active material includes the transition metal oxide including the transition metal M2, an amount of substance of lithium included in the lithium oxide and the transition metal oxide is defined as m₀ (mol). An amount of substance of the transition metal M1 in the positive electrode active material is defined as m₁ (mol). An amount of substance of the transition metal M2 in the positive electrode active material is defined as m₂ (mol). A ratio (m₁+m₂)/(m₀+m₁+m₂) is, for example, 0.01 or more and 0.34 or less. The reducing effect on an increase of the charging voltage and the enhancing effect on the discharge capacity are increased by adjusting the ratio (m₁+m₂)/(m₀+m₁+m₂) as appropriate.

In the case where the transition metals M1 and M2 are the same elements, the amount of substance m₁ is the amount of substance of the transition metal M1 in the positive electrode active material. The above ratio is expressed as (m₁/(m₀+m₁)).

The presence of the transition metal oxide can be confirmed by X-ray diffraction measurement. The solid solubility of the transition metal M1 in the lithium oxide and a preferred amount of the transition metal oxide can be determined on the basis of a plurality of diffraction peaks derived from the lithium oxide in which the transition metal M1 is dissolved and at least one diffraction peak derived from the transition metal oxide.

In an X-ray diffraction pattern measured for the positive electrode active material using a Cu-Kα ray, a diffraction peak in a diffraction angle 2θ range from 30° to 40° is defined as a first diffraction peak. A diffraction peak in a diffraction angle 2θ range from 52° to 62° is defined as a second diffraction peak. A diffraction peak in a diffraction angle 2θ range from 40° to 50° is defined as a third diffraction peak. The first diffraction peak is a diffraction peak derived from a (111) plane of the lithium oxide. The second diffraction peak is a diffraction peak derived from a (220) plane of the lithium oxide. The third diffraction peak is a diffraction peak derived from a crystal plane of the transition metal oxide. An integrated intensity of the first diffraction peak is defined as I₁, an integrated intensity of the second diffraction peak is defined as I₂, and an integrated intensity of the third diffraction peak is defined as I₃. In the present embodiment, an integrated intensity ratio I₂/I₁ is 0.48 or more, and an integrated intensity ratio I₃/I₁ is 0.10 or more and 1.30 or less. An increase of the charging voltage of the battery 100 can be reduced and the discharging voltage of the battery 100 can be enhanced by satisfying these requirements. Moreover, reducing an increase of the charging voltage contributes to reduction of generation of oxygen gas.

The integrated intensity ratio I₂/I₁ is a measure that reflects the solid solubility of the transition metal M1 in a crystal of the lithium oxide. The valence of lithium is +1; assuming that the valence of the transition metal M1 is +3, two more lithium atoms other than the lithium atom substituted by the transition metal M1 are released from the crystal to maintain charge neutrality in the crystal. Since the transition metal M1 having a higher valence than that of a lithium atom is incorporated into the crystal and two lithium atoms are released from the crystal to maintain the charge neutrality, a subtle distortion occurs in the crystal structure of the lithium oxide being a matrix. The larger the distortion is, the larger the integrated intensity ratio I₂/I₁ is. According to quantum science calculation, an amount of the transition metal M1 doped into the lithium oxide and the integrated intensity ratio I₂/I₁ are in a proportional relationship. When the transition metal M1 is sufficiently dissolved, the reducing effect on an increase of the charging voltage and the enhancing effect on the discharge capacity are also increased. It should be noted that a theoretical integrated intensity ratio I₂/I₁ of Li₂O crystal is approximately 0.33.

The integrated intensity ratio I₃/I₁ is a measure that reflects an amount of a residue of the raw material used to dissolve the transition metal M1 into lithium oxide and/or a by-product. For example, in the case of dissolving cobalt into lithium oxide to form a solid solution using cobalt oxide or lithium cobalt oxide as a raw material, LiCoO₂ is included in the positive electrode active material as a residue and/or a by-product. In this case, reflection from the (104) plane of LiCoO₂ is observed as the third diffraction peak. As the amount of the residue and/or the by-product decreases, a diffraction intensity of the third diffraction peak decreases, and so does the integrated intensity ratio I₃/I₁. As the amount of the residue and/or the by-product increases, the diffraction intensity of the third diffraction peak increases, and so does the integrated intensity ratio I₃/I₁. The compositions and the structures of the residue and/or by-product included in the positive electrode active material can be determined from an entire X-ray diffraction pattern including the third diffraction peak. When there is a crystal of the transition metal oxide, a diffraction peak appears in the diffraction angle 2θ range from 40° to 50°, regardless of the type of the transition metal.

The reason why the reducing effect on an increase of the charging voltage and the enhancing effect on the discharge capacity increase in the case where the transition metal M1 is dissolved in the lithium oxide to form a solid solution as appropriate and the residue and/or the by-product is present in an appropriate amount without disappearing is not perfectly clear, but the present inventors infer as follows. In a charging process, oxygen ions are oxidized to form a peroxide ion upon extraction of lithium atoms from the lithium oxide, and thereby the lithium oxide turns into lithium peroxide. If the positive electrode active material is composed only of a lithium oxide in which the transition metal M1 is completely dissolved to form a solid solution, volume shrinkage of the positive electrode active material in the charging process is so large that a gap forms between the positive electrode active material and the conductive additive, and that increases the electron resistance of a whole electrode to induce an increase in charging voltage. On the other hand, according to the present disclosure, as the residue and/or the by-product including the transition metal M2 is present in an appropriate amount in the positive electrode active material, volume shrinkage of the positive electrode active material in the charging process is reduced using charge compensation by valence change in the transition metal M2. As a result, the reducing effect on an increase of the charging voltage and the enhancing effect on the discharge capacity are exhibited. Achievement of these effects are supported by later-described examples.

The lower limit of the integrated intensity ratio I₂/I₁ may be 0.50 or 0.55. The upper limit of the integrated intensity ratio I₂/I₁ is not limited to a particular value, and may be 1.00 or 0.90. The integrated intensity ratio I₂/I₁ may be 0.50 or more and 1.00 or less, 0.50 or more and 0.90 or less, 0.55 or more and 1.00 or less, or 0.55 or more and 0.90 or less.

The integrated intensity ratio I₃/I₁ is desirably 0.20 or more. The integrated intensity ratio I₃/I₁ may be 1.10 or less, or 1.00 or less.

The ranges of the integrated intensity ratios I₂/I₁ and I₃/I₁ can be determined by any combination of the above values. For example, the integrated intensity ratio I₂/I₁ may be 0.48 or more while the integrated intensity ratio I₃/I₁ may be 0.20 or more and 1.10 or less.

The integrated intensity ratio I₂/I₁ may be 0.50 or more and 1.00 or less while the integrated intensity ratio I₃/I₁ may be 0.10 or more and 1.30 or less. The integrated intensity ratio I₂/I₁ may be 0.50 or more and 1.00 or less while the integrated intensity ratio I₃/I₁ may be 0.20 or more and 1.10 or less. The integrated intensity ratio I₂/I₁ may be 0.50 or more and 1.00 or less while the integrated intensity ratio I₃/I₁ may be 0.20 or more and 1.00 or less.

The integrated intensity ratio I₂/I₁ may be 0.50 or more and 0.90 or less while the integrated intensity ratio I₃/I₁ may be 0.10 or more and 1.30 or less. The integrated intensity ratio I₂/I₁ may be 0.50 or more and 0.90 or less while the integrated intensity ratio I₃/I₁ may be 0.20 or more and 1.10 or less. The integrated intensity ratio I₂/I₁ may be 0.50 or more and 0.90 or less while the integrated intensity ratio I₃/I₁ may be 0.20 or more and 1.00 or less.

The integrated intensity ratio I₂/I₁ may be 0.55 or more and 1.00 or less while the integrated intensity ratio I₃/I₁ may be 0.10 or more and 1.30 or less. The integrated intensity ratio I₂/I₁ may be 0.55 or more and 1.00 or less while the integrated intensity ratio I₃/I₁ may be 0.20 or more and 1.10 or less. The integrated intensity ratio I₂/I₁ may be 0.55 or more and 1.00 or less while the integrated intensity ratio I₃/I₁ may be 0.20 or more and 1.00 or less.

The integrated intensity ratio I₂/I₁ may be 0.55 or more and 0.90 or less while the integrated intensity ratio I₃/I₁ may be 0.10 or more and 1.30 or less. The integrated intensity ratio I₂/I₁ may be 0.55 or more and 0.90 or less while the integrated intensity ratio I₃/I₁ may be 0.20 or more and 1.10 or less. The integrated intensity ratio I₂/I₁ may be 0.55 or more and 0.90 or less while the integrated intensity ratio I₃/I₁ may be 0.20 or more and 1.00 or less.

The integrated intensity ratio I₂/I₁ of a crystal of Li₂O not doped with the transition metal M1 is approximately 0.33. It can be considered that the transition metal M1 is dissolved in the lithium oxide to form a solid solution when the lithium oxide maintains the antifluorite crystal structure of Li₂O and the integrated intensity ratio I₂/I₁ of the lithium oxide is more than 0.33.

The positive electrode active material has a structure of a secondary particle, for example, composed of a plurality of primary particles of the lithium oxide and a plurality of primary particles of the transition metal oxide. The positive electrode active material having this structure can be manufactured efficiently by a synthesis technique, such as mechanochemical milling. The primary particle has a diameter, for example, on the order of nanometers. The secondary particle has a diameter, for example, on the order of micrometers.

The positive electrode active material has a true density of, for example, 2.0 g/cm³ or more and 3.3 g/cm³ or less. An energy density of the battery 100 can be enhanced, compared to conventional lithium secondary batteries, by adjusting the true density as appropriate. The true density can be measured by pycnometry after the positive electrode active material is finely pulverized.

The positive electrode active material has a specific surface area of, for example, 1.6 m²/g or more and 60 m²/g or less. The energy density of the battery 100 can be enhanced by adjusting the specific surface area as appropriate. The specific surface area is determined by the BET method.

The positive electrode active material may have a particle shape. Each particle of the positive electrode active material can have a cross-sectional area of 0.01 µm² or more and 500 µm² or less. The cycle characteristics of the battery 100 can be improved by adjusting the size of the particle of the positive electrode active material as appropriate. The cross-section of each particle of the positive electrode active material can be calculated using a cross-sectional SEM image of the positive electrode 23. Every particle of the positive electrode active material may have a cross-sectional area in the above range, or some of the particles (e.g., 90% or more on a number basis) may have a cross-sectional area in the above range.

The positive electrode active material can be manufactured, for example, by the mechanochemical method. First, a lithium oxide powder and a raw material of the transition metal M1 are mixed to prepare a mixture. A ratio between the lithium oxide and the raw material of the transition metal M1 can be determined such that the above-described ratio (m₁/(m₀+m₁)) is in a desired range. Examples of the raw material of the transition metal M1 include an oxide of the transition metal M1, a double oxide including lithium and the transition metal M1, and the elemental transition metal M1.

Synthesis of the positive electrode active material by the mechanochemical method is performed using an apparatus, such as a ball mill or a bead mill, that can exhibit the mechanochemical effect. The atmosphere during the synthesis is not limited to a particular atmosphere, and may be an air atmosphere, an inert atmosphere, a dry atmosphere, or a dry inert atmosphere. To suppress ingress of inevitable impurities, such as oxygen and water, it is desirable that synthesis of the positive electrode active material be performed in a dry inert atmosphere. An inert gas, such as nitrogen, argon, or helium, is used to create the inert atmosphere.

The solid solubility of the transition metal M1 in the lithium oxide can be adjusted by adjusting conditions such as the rotation speed of the apparatus, the processing time, the treatment temperature, the sizes of the particles of the raw materials, the composition of the raw material of the transition metal M1, the size of a milling medium, etc. That is, the integrated intensity ratios I₂/I₁ and I₃/I₁ can be controlled. For example, dissolution of the transition metal M1 into lithium oxide to form a solid solution progresses with increasing rotation speed and/or processing time, which increases the ratio I₂/I₁ and decreases the ratio I₃/I₁. The positive electrode active material that can reduce an increase of the charging voltage and enhance the discharge capacity is obtained by setting the manufacturing conditions such that the integrated intensity ratios I₂/I₁ and I₃/I₁ are in desired ranges.

### [Other embodiments]

### (Supplement)

According to the description of the above embodiment, the following techniques are disclosed.

### (Technique 1)

A battery including: a positive electrode; a negative electrode; a separator; and an electrolyte solution, wherein
the positive electrode includes, as a positive electrode active material, a lithium oxide in which a transition metal is dissolved to form a solid solution, the lithium oxide having an antifluorite crystal structure,
the electrolyte solution includes a solvent mixture of a fluorinated cyclic ester and an additional solvent, and
a concentration of the fluorinated cyclic ester in the electrolyte solution is 75 volume% or less.

The battery configured as described above can have improved cycle characteristics.

### (Technique 2)

The battery according to Technique 1, wherein the concentration of the fluorinated cyclic ester in the electrolyte solution is 2 volume% or more and 5 volume% or less. The improving effect on the cycle characteristics of the battery is increased by adjusting the concentration of the fluorinated cyclic ester as appropriate.

### (Technique 3)

The battery according to Technique 1 or 2, wherein the fluorinated cyclic ester includes a fluorinated cyclic carbonate.

### (Technique 4)

The battery according to any one of Techniques 1 to 3, wherein the fluorinated cyclic ester includes fluoroethylene carbonate. The improving effect on the cycle characteristics of the battery is easily achieved.

### (Technique 5)

The battery according to any one of Techniques 1 to 4, wherein the positive electrode active material has a particle shape, and a particle of the positive electrode active material has a cross-sectional area of 0.01 µm² or more and 500 µm² or less. The cycle characteristics of the battery can be improved by adjusting the size of the particle of the positive electrode active material as appropriate.

### (Technique 6)

The battery according to any one of Techniques 1 to 5, wherein the negative electrode includes lithium metal. In this case, the energy density of the battery can be increased.

### (Technique 7)

The battery according to any one of Techniques 1 to 6, wherein the positive electrode active material further includes a transition metal oxide including a transition metal M2, and in an X-ray diffraction pattern measured for the positive electrode active material using a Cu-Kα ray, a ratio of an integrated intensity of a second diffraction peak derived from a (220) plane of the lithium oxide in a diffraction angle 2θ range from 52° to 62° to an integrated intensity of a first diffraction peak derived from a (111) plane of the lithium oxide in a diffraction angle 2θ range from 30° to 40° is 0.48 or more, and a ratio of an integrated intensity of a third diffraction peak derived from a crystal plane of the transition metal oxide in a diffraction angle 20 range from 40° to 50° to the integrated intensity of the first diffraction peak is 0.10 or more and 1.30 or less. In this case, an increase of the charging voltage can be reduced and the discharge capacity can be enhanced.

### (Technique 8)

The battery according to Technique 7, wherein the positive electrode active material has a structure of a secondary particle composed of a plurality of primary particles of the lithium oxide and a plurality of primary particles of the transition metal oxide. The positive electrode active material having this structure can be manufactured efficiently by a variety of granulation techniques.

### EXAMPLES

Hereinafter, operations in production of positive electrode active materials and operations in production of batteries were performed under a dry atmosphere or an argon atmosphere. The dry atmosphere is an air atmosphere having a dew point of -40°C or lower. Some of Examples, Comparative Example, and Samples underwent the same operation multiple times in order to obtain a sufficient amount of a specimen.

### [Preparation of electrolyte solution]

### (Comparative Example 1)

Ethylene carbonate and diethyl carbonate were mixed in a volume ratio of 1:1 to give a solvent mixture. LiPF₆ was dissolved in the solvent mixture to a concentration of 1 mol/L to give an electrolyte solution of Comparative Example 1.

### (Examples 1 and 2)

Fluoroethylene carbonate (FEC) was added to the electrolyte solution of Comparative Example 1 to prepare electrolyte solutions of Examples 1 and 2. The concentrations of FEC in the electrolyte solutions of Examples 1 and 2 were respectively 2 volume% and 5 volume%. These concentrations (volume%) are the concentrations at 25°C.

### (Examples 3 to 5)

To a solvent mixture including ethylene carbonate and diethyl carbonate in a volume ratio of 1:1 was added FEC to concentrations shown in Table 1 so as to give solvent mixtures. LiPF₆ was dissolved in these solvent mixtures to a concentration of 1 mol/L to give electrolyte solutions of Examples 3 to 5. For Examples 3 to 5, the values shown in Table 1 are the volume concentrations of FEC in the electrolyte solutions and the volume concentrations of FEC in the solvent mixtures. For example, in the case of Example 5, the concentration of FEC in the electrolyte solution is 71 volume%, and the concentration of FEC in the solvent mixture is 75 volume%.

### (Comparative Example 2)

LiPF₆ was dissolved in FEC to a concentration of 1 mol/L to give an electrolyte solution of Comparative Example 2.

### [Production of positive electrode active material]

An amount of 1.00 g of Li₂O and 0.82 g of LiCoO₂ were pulverized and mixed in a mortar to give a mixture. The mixture was put into a planetary ball mill (P-7 manufactured by Fritsch GmbH; a 45 mL container) together with 45 g of zirconia balls (diameter: 5 mm), and was subjected to milling at 420 rpm for 100 hours. A positive electrode active material was obtained in this manner.

### [Production of battery]

A CR2016 coin battery was produced using the above positive electrode active material. A positive electrode composite material including the positive electrode active material, acetylene black, and polytetrafluoroethylene in a mass ratio of 7:2:1 was used as a positive electrode. Lithium metal was used as a negative electrode. In Example 1, Example 2, and Comparative Example 1, a porous polyolefin membrane was used as a separator. In Examples 3 to 5 and Comparative Example 2, a non-woven glass fiber fabric was used as a separator. An amount of 120 µL of each of the electrolyte solutions of Examples and Comparative Example was used as an electrolyte solution.

### [Charge-discharge test]

The batteries of Examples and Comparative Example were charged at a current of 0.40 mA under the conditions that the maximum voltage was 3.4 V and the upper limit of the charge capacity was 600 mAh/g. After a 20-minute rest period, constant-current discharging was performed at 0.40 mA until the voltage reached 1.8 V. After the constant-current discharging, constant-voltage discharging was performed at 1.8 V until the current value reached 5 mA/g. The unit "mA/g" of the current value represents the current value per gram of Li₂O. This charge-discharge cycle was repeated 15 times. Table 1 shows the charge capacities and the discharge capacities in the first, fifth, tenth, and fifteenth cycles. In Table 1, the unit "mAh/g" of the volume represents a volume per gram of Li₂O.

**[Table 1]**

| | | First cycle | | Fifth cycle | | Tenth cycle | | Fifteenth cycle | |
|---|---|---|---|---|---|---|---|---|---|
| | Fluorinated cyclic ester concentration (vol%) | Charge capacity (mAh/g) | Discharge capacity (mAh/g) | Charge capacity (mAh/g) | Discharge capacity (mAh/g) | Charge capacity (mAh/g) | Discharge capacity (mAh/g) | Charge capacity (mAh/g) | Discharge capacity (mAh/g) |
| Example 1 | 2 | 600 | 689 | 600 | 592 | 600 | 595 | 600 | 595 |
| Example 2 | 5 | 600 | 689 | 600 | 592 | 600 | 596 | 600 | 597 |
| Example 3 | 24 (25) | 600 | 727 | 600 | 593 | 600 | 594 | 411 | 409 |
| Example 4 | 47 (50) | 601 | 732 | 601 | 593 | 601 | 596 | 511 | 503 |
| Example 5 | 71 (75) | 600 | 724 | 600 | 594 | 600 | 528 | 600 | 479 |
| Comparative Example 1 | 0 | 600 | 658 | 600 | 234 | 153 | 146 | 133 | 130 |
| Comparative Example 2 | 95 (100) | 600 | 736 | 600 | 594 | 600 | 271 | 600 | 344 |

As shown in Table 1, the batteries of Examples exhibited high discharge capacities through the fifteenth cycle. On the other hand, the battery of Comparative Example 1 experienced a great decrease in discharge capacity in the fifth cycle. In the tenth cycle, an overpotential increased, and the charge capacity greatly decreased. The battery of Comparative Example 2 experienced a great decrease in discharge capacity in the tenth cycle. These results indicate that the cycle characteristics of a battery can be improved by a solvent mixture including the fluorinated cyclic ester at an appropriate concentration.

From the results shown in Table 1, it can be said that the concentration of the fluorinated cyclic ester in the solvent mixture of the electrolyte solution is desirably 75 volume% or less, and more desirably 2 volume% or more and 5 volume% or less. When the concentration of the fluorinated cyclic ester is relatively low, the electrolyte solution has a lower viscosity and the electrolyte solution easily soaks into a member such as the separator.

The reason why the discharge capacity in the first cycle was higher than the charge capacity in the first cycle in Examples and Comparative Example is not perfectly clear. It is inferred that the discharge capacity reflected a valence change of Co, a change of the crystal structure of the positive electrode active material, etc.

Next, a plurality of positive electrode active materials were produced under different production conditions and/or using different raw materials, and the charging voltages and the discharge capacities of batteries including these positive electrode active materials were examined.

### [Production of positive electrode active material: Co type]

### (Sample 1)

An amount of 1.00 g of Li₂O and 0.82 g of LiCoO₂ were pulverized and mixed in a mortar to give a mixture. The mixture was put into a planetary ball mill (P-7 manufactured by Fritsch GmbH; a 45 mL container) together with 45 g of zirconia balls (diameter: 5 mm), and was subjected to milling at 420 rpm for 100 hours. A positive electrode active material of Sample 1 was obtained in this manner.

### (Sample 2)

A positive electrode active material of Sample 2 was produced in the same manner as in Sample 1, except that the mixture was subjected to milling at 600 rpm for 36 hours.

### (Sample 3)

A positive electrode active material of Sample 3 was produced in the same manner as in Sample 1, except that a planetary ball mill (PL-7 manufactured by Fritsch GmbH; a 45 mL container) was used.

### (Sample 4)

A positive electrode active material of Sample 4 was produced in the same manner as for the positive electrode active material of Sample 3 at another time on another day. As described later, major differences between Sample 3 and Sample 4 are a rate of vinylene carbonate in the electrolyte solution of the battery and the amount of the positive electrode composite material.

### (Sample 5)

A positive electrode active material of Sample 5 was produced in the same manner as in Sample 1, except that 2.00 g of Li₂O and 1.63 g of LiCoO₂ were used and that the mixture was subjected to milling at 600 rpm for 100 hours.

### (Sample 6)

A positive electrode active material of Sample 6 was produced in the same manner as in Sample 1, except that 2.00 g of Li₂O and 1.63 g of LiCoO₂ were used and that after the mixture was subjected to milling at 600 rpm for 100 hours, the product was subjected to a thermal treatment. The thermal treatment was performed in an argon atmosphere at 250°C (ambient temperature) for 6 hours. The temperature was increased over one hour, and the product was cooled slowly by natural cooling after the thermal treatment.

### (Sample 7)

An amount of 2.00 g of Li₂O and 1.34 g of Co₃O₄ were pulverized and mixed in a mortar to give a mixture. The mixture was put into a planetary ball mill (P-7 manufactured by Fritsch GmbH; a 45 mL container) together with 45 g of zirconia balls (diameter: 5 mm), and was subjected to milling at 420 rpm for 100 hours. A positive electrode active material of Sample 7 was obtained in this manner.

### (Sample 8)

A positive electrode active material of Sample 8 was produced in the same manner as in Sample 1, except that 2.00 g of Li₂O and 1.64 g of LiCoO₂ were used.

### (Sample 9)

An amount of 5.00 g of Li₂O and 4.08 g of LiCoO₂ were pulverized and mixed in a mortar to give a mixture. The mixture was put into a planetary ball mill (PL-7 manufactured by Fritsch GmbH; a 80 mL container) together with 98 g of zirconia balls (diameter: 5 mm), and was subjected to milling at 420 rpm for 100 hours. A positive electrode active material of Sample 9 was obtained in this manner.

### (Sample 10)

A positive electrode active material of Sample 10 was produced in the same manner as in Sample 9, except that the processing time was changed to 150 hours.

### (Sample 11)

A positive electrode active material of Sample 11 was produced in the same manner as for the positive electrode active material of Sample 3. As described later, major differences between Sample 3 and Sample 11 are the rate of vinylene carbonate in the electrolyte solution of the battery and the amount of the positive electrode composite material.

### (Sample 12)

A positive electrode active material of Sample 12 was produced at the same time as the positive electrode active material of Sample 11 using the same materials. Specifically, a container of Sample 11 was set on one position in the planetary ball mill, while a container of Sample 12 was set on another position in the planetary ball mill. It should be noted that, as described later, the amount of the positive electrode composite material included in the battery of Sample 12 was different from the amount of the positive electrode composite material included in the battery of Sample 11.

### (Sample 13)

A positive electrode active material of Sample 13 was produced at the same time as the positive electrode active material of Sample 4 using the same materials. Specifically, a container of Sample 4 was set on one position in the planetary ball mill, while a container of Sample 13 was set on another position in the planetary ball mill. It should be noted that, as described later, the type of the electrolyte solution and the amount of the positive electrode composite material included in the battery of Sample 13 were different from the type of the electrolyte solution and the amount of the positive electrode composite material included in the battery of Sample 4.

### (Sample 14)

A positive electrode active material of Sample 14 was produced in the same manner as in Sample 1, except that 2.00 g of Li₂O and 1.64 g of LiCoO₂ were used and that the processing time was changed to 10 hours.

### (Sample 15)

A positive electrode active material of Sample 15 was produced in the same manner as in Sample 1, except that 2.00 g of Li₂O and 1.63 g of LiCoO₂ were used and that after the mixture was subjected to milling at 600 rpm for 100 hours, the product was subjected to a thermal treatment. The thermal treatment was performed in an argon atmosphere at 350°C (ambient temperature) for 6 hours. The temperature was increased over one hour, and the product was cooled slowly by natural cooling after the thermal treatment.

### (Sample 16)

A positive electrode active material of Sample 16 was produced in the same manner as in Sample 1, except that 2.00 g of Li₂O and 1.63 g of LiCoO₂ were used and that after the mixture was subjected to milling at 600 rpm for 100 hours, the product was subjected to a thermal treatment. The thermal treatment was performed in an argon atmosphere at 450°C (ambient temperature) for 6 hours. The temperature was increased over one hour, and the product was cooled slowly by natural cooling after the thermal treatment.

### [Production of positive electrode active material: Cu type]

### (Sample 17)

An amount of 2.00 g of Li₂O and 1.78 g of CuO were pulverized and mixed in a mortar to give a mixture. The mixture was put into a planetary ball mill (P-7 manufactured by Fritsch GmbH; a 45 mL container) together with 45 g of zirconia balls (diameter: 5 mm), and was subjected to milling at 600 rpm for 100 hours. A positive electrode active material of Sample 17 was obtained in this manner.

### (Sample 18)

A positive electrode active material of Sample 18 was produced in the same manner as in Sample 17, except that 2.00 g of Li₂O and 0.67 g of CuO were used.

### (Sample 19)

A positive electrode active material of Sample 19 was produced in the same manner as in Sample 17, except that 1.99 g of Li₂O and 1.14 g of CuO were used.

### (Sample 20)

A positive electrode active material of Sample 20 was produced in the same manner as in Sample 17, except that 2.00 g of Li₂O and 1.43 g of CuO were used.

### (Sample 21)

A positive electrode active material of Sample 21 was produced in the same manner as in Sample 17, except that 1.99 g of Li₂O and 0.66 g of CuO were used and that the processing time was changed to 48 hours.

### (Sample 22)

A positive electrode active material of Sample 22 was produced in the same manner as in Sample 17, except that 2.00 g of Li₂O and 0.47 g of CuO were used.

### [Production of positive electrode active material: Fe type]

### (Sample 23)

An amount of 2.00 g of Li₂O and 1.19 g of Fe₂O₃ were pulverized and mixed in a mortar to give a mixture. The mixture was put into a planetary ball mill (P-7 manufactured by Fritsch GmbH; a 45 mL container) together with 45 g of zirconia balls (diameter: 5 mm), and was subjected to milling at 600 rpm for 100 hours. A positive electrode active material of Sample 23 was obtained in this manner.

### (Sample 24)

A positive electrode active material of Sample 24 was produced in the same manner as in Sample 23, except that 2.00 g of Li₂O and 0.89 g of Fe₂O₃ were used.

### (Sample 25)

An amount of 2.00 g of Li₂O and 1.29 g of Fe₃O₄ were pulverized and mixed in a mortar to give a mixture. The mixture was put into a planetary ball mill (P-7 manufactured by Fritsch GmbH; a 45 mL container) together with 45 g of zirconia balls (diameter: 5 mm), and was subjected to milling at 420 rpm for 100 hours. A positive electrode active material of Sample 25 was obtained in this manner.

### (Sample 26)

An amount of 5.00 g of Li₂O and 4.01 g of FeO were pulverized and mixed in a mortar to give a mixture. The mixture was put into a planetary ball mill (PL-7 manufactured by Fritsch GmbH; a 80 mL container) together with 98 g of zirconia balls (diameter: 5 mm), and was subjected to milling at 420 rpm for 150 hours. A positive electrode active material of Sample 26 was obtained in this manner.

### (Sample 27)

A positive electrode active material of Sample 27 was produced in the same manner as in Sample 23, except that the mixture was subjected to milling at 420 rpm for 72 hours.

### (Sample 28)

A positive electrode active material of Sample 28 was produced in the same manner as in Sample 23, except that 2.00 g of Li₂O and 0.63 g of Fe₂O₃ were used.

### [Measurement of X-ray diffraction]

Powder X-ray diffraction measurement was performed for each positive electrode active material. A powder X-ray diffractometer (MiniFlex 600 manufactured by Rigaku Corporation) was used for the X-ray diffraction measurement. The measurement conditions are as follows.

### Cu-Ka ray

Detector: HyPix-400 MF
Scan step: 0.02 degrees
Scan speed: 2 deg/min
2θ: 10 to 80 degrees

An average spectrum of eight measurements was adopted.

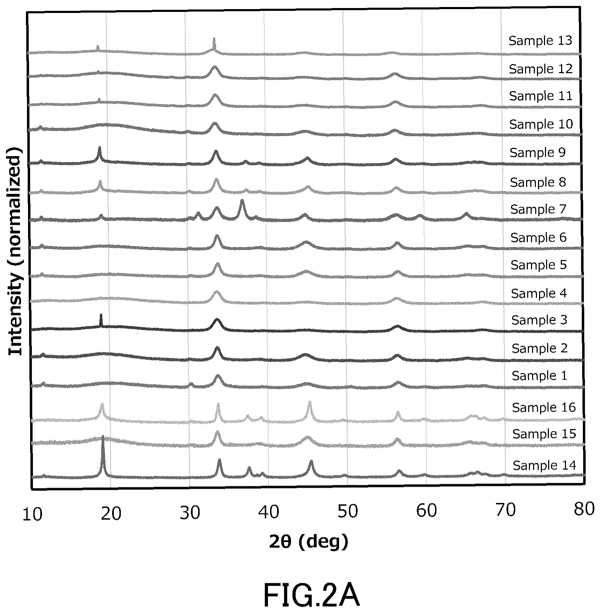

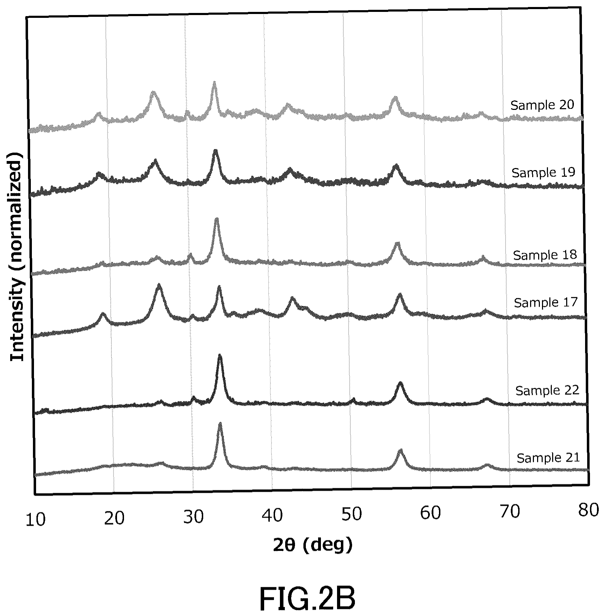

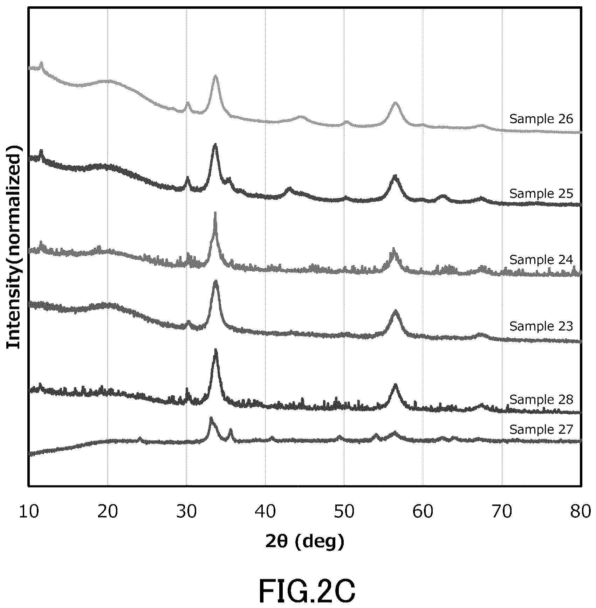

FIG. 2A shows X-ray diffraction patterns of the positive electrode active materials including Co as the transition metal M1. FIG. 2B shows X-ray diffraction patterns of the positive electrode active materials including Cu as the transition metal M1. FIG. 2C shows X-ray diffraction patterns of the positive electrode active materials including Fe as the transition metal M1.

### [Calculation of integrated intensity ratios]

The X-ray diffraction pattern of each positive electrode active material was analyzed using an analysis software (OriginPro 2022 manufactured by OriginLab Corporation). That is, the integrated intensity I₁ of the first diffraction peak, the integrated intensity I₂ of the second diffraction peak, and the integrated intensity I₃ of the third diffraction peak were calculated. In the case where there were a plurality of peaks corresponding to the third diffraction peak, peak separation was performed using the Lorentzian function or the Voigt function. The integrated intensity of each separated peak was determined, and the sum of the integrated intensities was considered the integrated intensity I₃ of the third diffraction peak. For example, in the case of using Cu as the transition metal M1, a diffraction peak derived from reflection from the (013) plane of a Li₂CuO₂ crystal classified into space group Immm and a diffraction peak derived from reflection from the (103) plane of a Li₂CuO₂ crystal appear in the diffraction angle 2θ range from 40° to 50°. The sum of the integrated intensities of the peaks was considered the integrated intensity I₃ of the third diffraction peak.

Another diffraction peak of Li₂CuO₂ (space group Immm) appears at 49.94°. This diffraction peak is in a proportional relation with the diffraction peaks appearing in the range from 40° to 45°, and the intensity thereof is weak. Hence, the integrated intensities of only the diffraction peaks appearing in the range from 40° to 45° were used for the calculation as a measure of a ratio of Li₂CuO₂ to lithium oxide.

In the case of using Co as the transition metal M1, the integrated intensity I₃ was calculated assuming that a diffraction peak derived from reflection from the (104) plane of a LiCoO₂ crystal classified into space group R-3m corresponded to the third diffraction peak. In the case of using Fe as the transition metal M1, the integrated intensity I₃ was calculated assuming that diffraction peaks derived from reflection from the (204) plane and the (323) plane of Li₅FeO₄ corresponded to the third diffraction peak. Table 2A shows the results for the calculation of the integrated intensity ratio I₂/I₁ and the integrated intensity ratio I₃/I₁.

Another diffraction peak of LiCoO₂ (space group R-3m) also appears at 49.77°. This diffraction peak is in a proportional relation with the diffraction peak appearing in the range from 40° to 45°, and the intensity thereof is weak. Hence, the integrated intensity of only the diffraction peak appearing in the range from 40° to 45° was used for the calculation as a measure of a ratio of LiCoO₂ to lithium oxide.

**[Table 2A]**

| | Raw material of transition metal M1 | I₂/I₁ | I₃/I₁ | True density (g/cm³) | Specific surface area (m²/g) |
|---|---|---|---|---|---|
| Sample 1 | LiCoO₂ | 0.5090 | 0.6209 | 2.58 | - |
| Sample 2 | LiCoO₂ | 0.5166 | 0.9280 | 3.32 | - |
| Sample 3 | LiCoO₂ | 0.5536 | 0.2600 | 2.43 | 5.1647 |
| Sample 4 | LiCoO₂ | 0.6021 | 0.2788 | 2.43 | 6.7207 |
| Sample 5 | LiCoO₂ | 0.5520 | 0.9065 | - | - |
| Sample 6 | LiCoO₂ | 0.5768 | 1.0757 | - | - |
| Sample 7 | Co₃O₄ | 0.5056 | 0.4040 | - | - |
| Sample 8 | LiCoO₂ | 0.5637 | 0.7782 | - | - |
| Sample 9 | LiCoO₂ | 0.5246 | 0.7914 | - | - |
| Sample 10 | LiCoO₂ | 0.5972 | 0.6393 | - | - |
| Sample 11 | LiCoO₂ | 0.5835 | 0.3261 | - | 5.4201 |
| Sample 12 | LiCoO₂ | 0.5764 | 0.3131 | - | 6.2619 |
| Sample 13 | LiCoO₂ | 0.4850 | 0.6492 | 2.48 | - |
| Sample 14 | LiCoO₂ | 0.4901 | 1.3017 | - | - |
| Sample 15 | LiCoO₂ | 0.5504 | 1.3193 | - | - |
| Sample 16 | LiCoO₂ | 0.5962 | 1.4902 | - | - |
| Sample 17 | CuO | 0.9523 | 1.2036 | 2.65 | - |
| Sample 18 | CuO | 0.7490 | 0.1230 | 2.31 | - |
| Sample 19 | CuC | 0.8099 | 0.9957 | 2.61 | - |
| Sample 20 | CuO | 0.9319 | 0.8366 | 2.66 | - |
| Sample 21 | CuO | 0.5894 | 0.0748 | - | - |
| Sample 22 | CuO | 0.5683 | 0.0931 | 2.15 | - |
| Sample 23 | Fe₂O₃ | 0.7639 | 0.1326 | - | - |
| Sample 24 | Fe₂O₃ | 0.6349 | 0.1888 | - | - |
| Sample 25 | Fe₃O₄ | 0.7055 | 0.3699 | - | - |
| Sample 26 | FeO | 0.5731 | 0.3161 | - | - |
| Sample 27 | Fe₂O₃ | 0.5160 | 0.0707 | - | - |
| Sample 28 | Fe₂O₃ | 0.5870 | 0.0657 | - | - |

### [Scanning electron microscope (SEM) observation]

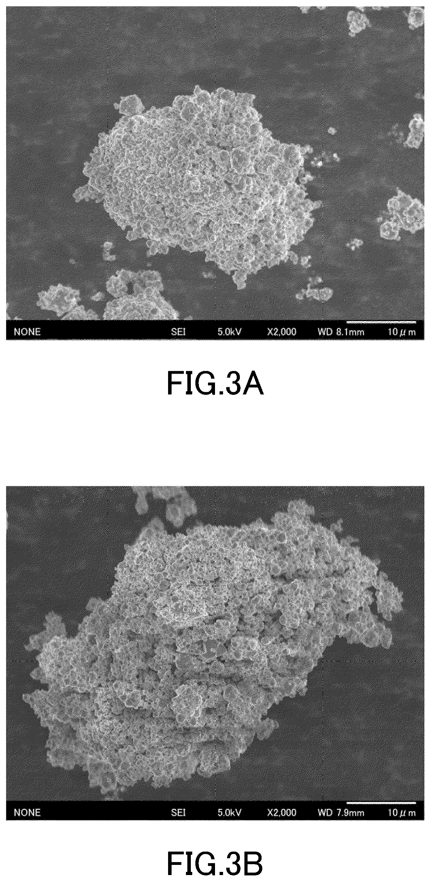

FIG. 3A shows a SEM image of the positive electrode active material of Sample 3. FIG. 3B shows a SEM image of the positive electrode active material of Sample 17. As can be understood from these SEM images, the positive electrode active materials of Sample 3 and Sample 17 had a structure of secondary particle. The positive electrode active materials of other samples also had a similar structure of secondary particle.

### [Measurement of true density]

The true densities of the positive electrode active materials of Samples 1 to 4, Sample 13, Samples 17 to 20, and Sample 22 were measured by pycnometry.

### [Measurement of specific surface area]

The specific surface areas of the positive electrode active materials of Sample 3, Sample 4, Sample 11, and Sample 12 were measured by the BET method.

### [Production of battery]

CR2016 coin batteries of Samples 1 to 28 were produced using the positive electrode active materials of Samples 1 to 28. A positive electrode composite material including the positive electrode active material, acetylene black, and polytetrafluoroethylene in a mass ratio of 7:2:1 was used as a positive electrode.

Lithium metal foil having a thickness of 0.3 mm was used as a negative electrode. A three-layer separator including a non-woven fabric, a polyolefin resin film, and a non-woven fabric was used as a separator. Batteries of Sample 13-1, Sample 13-2, and Sample 13-3 are identical coin batteries produced using the positive electrode active material of Sample 13, and the charge-discharge test conditions for the batteries are different.

An electrolyte solution A included in the battery of Sample 1 was prepared by the following method. Ethylene carbonate and diethyl carbonate were mixed in a volume ratio of 1:1. With the mixture of ethylene carbonate and diethyl carbonate was mixed 1 volume% vinylene carbonate to give a solvent mixture. LiPF₆ was dissolved in the solvent mixture to a concentration of 1 mol/L to prepare the electrolyte solution A.

An electrolyte solution B was prepared in the same manner as for the electrolyte solution A, except that the rate of vinylene carbonate in the solvent mixture was changed to 5 volume%. An electrolyte solution C was prepared in the same manner as for the electrolyte solution A, except that the rate of vinylene carbonate in the solvent mixture was changed to 10 volume%. An electrolyte solution D was prepared in the same manner as for the electrolyte solution A, except that vinylene carbonate was not used. Battery performance slightly varies depending on the amount of vinylene carbonate. However, the effect of vinylene carbonate reaches saturation at around 1 volume%, and therefore the battery performance is largely independent of the amount of vinylene carbonate.

Table 2B shows the type of the electrolyte solution and the amount of the positive electrode composite material included in each of the batteries of Samples 1 to 28.

**[Table 2B]**

| | Type of electrolyte solution | Amount of positive electrode composite material (mg) |
|---|---|---|
| Sample 1 | A | 24.3 |
| Sample 2 | A | 14.6 |
| Sample 3 | B | 24.6 |
| Sample 4 | C | 20.8 |
| Sample 5 | A | 13.0 |
| Sample 6 | A | 11.7 |
| Sample 7 | A | 17.6 |
| Sample 8 | B | 12.7 |
| Sample 9 | B | 14.7 |
| Sample 10 | B | 18.5 |
| Sample 11 | C | 17.8 |
| Sample 12 | C | 21.6 |
| Sample 13 | B | 16.6 |
| Sample 14 | A | 18.5 |
| Sample 15 | A | 12.2 |
| Sample 16 | A | 18.4 |
| Sample 17 | A | 12.7 |
| Sample 18 | A | 10.6 |
| Sample 19 | A | 11.2 |
| Sample 20 | A | 14.3 |
| Sample 21 | A | 15.6 |
| Sample 22 | A | 13.2 |
| Sample 23 | A | 14.4 |
| Sample 24 | A | 11.3 |
| Sample 25 | A | 14.8 |
| Sample 26 | D | 21.2 |
| Sample 27 | A | 16.2 |
| Sample 28 | A | 16.1 |

### [Charge-discharge test]

### (Sample 1)

The battery of Sample 1 was charged at a current of 64.7 mA/g under the conditions that the maximum voltage was 3.5 V and the upper limit of the charge capacity was 647 mAh/g. Table 3 shows the charge capacity, the voltage at 500 mAh/g, and the voltage at 600 mAh/g. After a 20-minute rest period, constant-current discharging was performed at a current of 64.7 mA/g until the voltage reached 1.0 V. Table 3 shows the discharge capacities at voltages of 2.2 V, 2.0 V, 1.8 V, and 1.5 V.

The unit "mAh/g" of the volume represents a volume per gram of Li₂O. The unit "mA/g" of the current value represents a current value per gram of Li₂O.

### (Sample 14)

The battery of Sample 14 was charged at a current of 64.7 mA/g under the conditions that the maximum voltage was 3.5 V and the upper limit of the charge capacity was 647 mAh/g. Table 3 shows the charge capacity, the voltage at 500 mAh/g, and the voltage at 600 mAh/g. After a 20-minute rest period, constant-current discharging was performed at a current of 64.7 mA/g until the voltage reached 1.5 V. Table 3 shows the discharge capacities at voltages of 2.2 V, 2.0 V, 1.8 V, and 1.5 V.

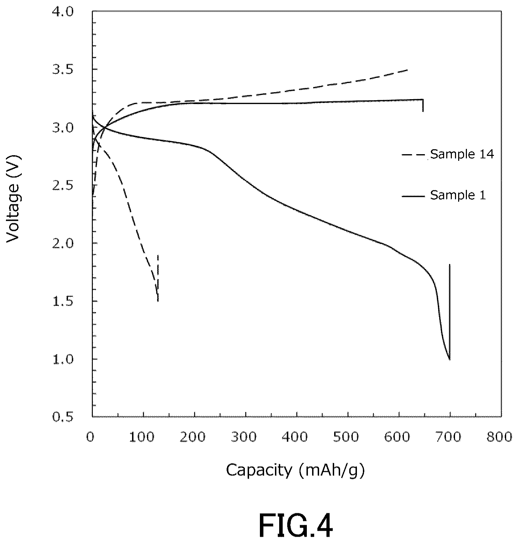

FIG. 4 is a graph showing charge-discharge curves of Sample 1 and Sample 14.

**[Table 3]**

| | Charge capacity (mAh/g) | Charging voltage (V) at 500 mAh/g | Charging voltage (V) at 600 mAh/q | Discharge capacity (mAh/g) at 2.2 V | Discharge capacity (mAh/g) at 2.0 V | Discharge capacity (mAh/g) at 1.8 V | Discharge capacity (mAh/g) at 1.5 V |
|---|---|---|---|---|---|---|---|
| Sample 1 | 647.0 | 3.229 | 3.247 | 440.4 | 559.6 | 640.2 | 676.8 |
| Sample 14 | 622.5 | 3.387 | 3.478 | 78.5 | 93.6 | 112.0 | 127.2 |

Differences between Sample 1 and Sample 14 are the amounts of the added raw materials and the milling time. The charging voltage of the battery of Sample 14 reached 3.5 V before the charge capacity reached 647 mAh/g. Therefore, the battery of Sample 14 had small discharge capacities. On the other hand, the charging voltage of the battery of Sample 1 stayed constant until the upper limit of the charge capacity, namely, 647 mAh/g, was reached. Additionally, the battery of Sample 1 showed large discharge capacities. That is, in the battery of Sample 1, an increase of the charging voltage was reduced and the discharge capacities were enhanced. It is thought that the positive electrode active material of Sample 14 excessively included a residue of the raw materials. Note that although the batteries of Sample 1 and Sample 14 are also different in terms of the amount of the positive electrode composite material used, such a difference has a very small impact on the charging voltage and the discharge capacity, compared to a difference in properties of positive electrode active materials.

A cycle of charging and discharging of the batteries of Sample 1 and Sample 14 was repeated under the above conditions. For each of the batteries of Sample 1 and Sample 14, a ratio of the discharge capacity in the second cycle to the charge capacity in the second cycle was calculated as a coulombic efficiency (unit: %). The coulombic efficiency of the battery of Sample 1 was 99.7%. The coulombic efficiency of the battery of Sample 14 was 84.1%. The battery of Sample 1 was excellent also in coulombic efficiency.

### (Sample 2)

The charge-discharge test was performed for the battery of Sample 2 under the same conditions for Sample 1. Table 4 shows the results.

### (Sample 3)

The battery of Sample 3 was charged at a current of 50.0 mA/g under the conditions that the maximum voltage was 3.4 V and the upper limit of the charge capacity was 600 mAh/g. Table 4 shows the charge capacity, the voltage at 500 mAh/g, and the voltage at 600 mAh/g. After a 20-minute rest period, constant-current discharging was performed at a current of 50.0 mA/g until the voltage reached 1.8 V. After that, discharging was performed at a constant voltage of 1.8 V until the current value reached 5 mA/g. Table 4 shows the discharge capacities at voltages of 2.2 V, 2.0 V, and 1.8 V.

### (Sample 4)

The battery of Sample 4 was charged at a current of 50.0 mA/g under the conditions that the maximum voltage was 3.4 V and the upper limit of the charge capacity was 600 mAh/g. Table 4 shows the charge capacity, the voltage at 500 mAh/g, and the voltage at 600 mAh/g. After a 20-minute rest period, constant-current discharging was performed at a current of 50.0 mA/g until the voltage reached 1.5 V. After that, constant-voltage discharging was performed at 1.5 V for 66 hours. Table 4 shows the discharge capacities at voltages of 2.2 V, 2.0 V, 1.8 V, and 1.5 V.

**[Table 4]**

| | Charge capacity (mAh/g) | Charging voltage (V) at 500 mAh/g | Charging voltage (V) at 600 mAh/g | Discharge capacity (mAh/g) at 2.2 V | Discharge capacity (mAh/g) at 2.0 V | Discharge capacity (mAh/g) at 1.8 V | Discharge capacity (mAh/g) at 1.5 V |
|---|---|---|---|---|---|---|---|
| Sample 2 | 647.2 | 3.246 | 3.270 | 378.4 | 493.1 | 570.1 | 607.7 |
| Sample 3 | 600.6 | 3.208 | 3.216 | 465.8 | 574.3 | 675.4 | - |
| Sample 4 | 599.4 | 3.183 | 3.187 | 499.3 | 620.1 | 705.4 | 733.4 |

For Sample 2, the rotation speed was high and the processing time was short, compared to Sample 1. An increase of the charging voltage was reduced and the discharge capacities were enhanced, as in Sample 1, by increasing the rotation speed.

Sample 3 and Sample 4 were produced using a different model of ball mill from the one used for Sample 1. An increase of the charging voltage was reduced and the discharge capacities were enhanced, as in Sample 1, even though the model of ball mill was changed.

The cycle of charging and discharging of the battery of Sample 2 was repeated under the above conditions. For the battery of Sample 2, a ratio of the discharge capacity in the second cycle to the charge capacity in the second cycle was calculated as a coulombic efficiency (unit: %). The coulombic efficiency of the battery of Sample 2 was 94.8%.

### (Samples 5 to 7, Sample 15, and Sample 16)

The batteries of Samples 5 to 7, Sample 15, and Sample 16 were charged and discharged at a current of 50.0 mA/g under the conditions that the maximum voltage was 3.4 V, the minimum voltage was 1.5 V, the upper limit of the charge-discharge capacity in the first cycle was 300 mAh/g, the upper limit of the charge-discharge capacity in the second cycle was 400 mAh/g, and the upper limit of the charge-discharge capacity in the third cycle was 500 mAh/g. The rest period between the charging process and the discharging process was 20 minutes. In the case where the voltage reached 1.5 V in the discharging process before the given capacity was reached, constant-voltage discharging was performed at 1.5 V for one hour. Table 5 shows the charge capacity in the third cycle and the voltage at 500 mAh/g in the charging in the third cycle. Table 5 shows the discharge capacities at voltages of 2.5 V, 2.2 V, 2.0 V, 1.8 V, and 1.5 V in the discharging in the third cycle.

### (Sample 8)

The battery of Sample 8 was charged and discharged at a current of 50.0 mA/g under the conditions that the maximum voltage was 3.4 V, the minimum voltage was 1.8 V, the upper limit of the charge-discharge capacity in the first cycle was 300 mAh/g, the upper limit of the charge-discharge capacity in the second cycle was 400 mAh/g, and the upper limit of the charge-discharge capacity in the third cycle was 500 mAh/g. The rest period between the charging process and the discharging process was 20 minutes. The voltage did not reach 1.8 V in the discharging process before the given capacities were reached. Table 5 shows the charge capacity in the third cycle and the voltage at 500 mAh/g in the charging in the third cycle. Table 5 shows the discharge capacities at voltages of 2.5 V, 2.2 V, 2.0 V, and 1.8 V in the discharging in the third cycle.

### (Sample 9)

The battery of Sample 9 was charged and discharged at a current of 50.0 mA/g under the conditions that the maximum voltage was 3.4 V, the minimum voltage was 1.8 V, the upper limit of the charge-discharge capacity in the first cycle was 300 mAh/g, the upper limit of the charge-discharge capacity in the second cycle was 400 mAh/g, and the upper limit of the charge-discharge capacity in the third cycle was 500 mAh/g. The rest period between the charging process and the discharging process was 20 minutes. In the case where the voltage reached 1.8 V in the discharging process before the given capacity was reached, constant-voltage discharging was performed at 1.8 V until the current value reached 5 mA/g. Table 5 shows the charge capacity in the third cycle and the voltage at 500 mAh/g in the charging in the third cycle. Table 5 shows the discharge capacities at voltages of 2.5 V, 2.2 V, 2.0 V, and 1.8 V in the discharging in the third cycle.

### (Sample 10)

The battery of Sample 10 was charged and discharged at a current of 50.0 mA/g under the conditions that the maximum voltage was 3.4 V, the minimum voltage was 1.8 V, the upper limit of the charge-discharge capacity in the first cycle was 300 mAh/g, the upper limit of the charge-discharge capacity in the second cycle was 400 mAh/g, and the upper limit of the charge-discharge capacity in the third cycle was 500 mAh/g. The rest period between the charging process and the discharging process was 20 minutes. The voltage did not reach 1.8 V in the discharging process before the given capacities were reached. Table 5 shows the charge capacity in the third cycle and the voltage at 500 mAh/g in the charging in the third cycle. Table 5 shows the discharge capacities at voltages of 2.5 V, 2.2 V, 2.0 V, and 1.8 V in the discharging in the third cycle.

### (Samples 11 and 12)

The batteries of Samples 11 and 12 were charged and discharged at a current of 50.0 mA/g under the conditions that the maximum voltage was 3.4 V, the minimum voltage was 1.8 V, the upper limit of the charge-discharge capacity in the first cycle was 300 mAh/g, the upper limit of the charge-discharge capacity in the second cycle was 500 mAh/g, the upper limit of the charge-discharge capacity in the third cycle was 600 mAh/g, and the upper limit of the charge-discharge capacity in the fourth cycle was 700 mAh/g. The rest period between the charging process and the discharging process was 20 minutes. The voltage did not reach 1.8 V in the discharging process before the given capacities were reached. Table 5 shows the charge capacity in the second cycle and the voltage at 500 mAh/g in the charging in the second cycle. Table 5 shows the discharge capacities at voltages of 2.5 V, 2.2 V, 2.0 V, and 1.8 V in the discharging in the second cycle.

**[Table 5]**

| | Charge capacity (mAh/g) | Charging voltage (V) at 500 mAh/g | Discharge capacity (mAh/g) at 2.5 V | Discharge capacity (mAh/g) at 2.2 V | Discharge capacity (mAh/g) at 2.0 V | Discharge capacity (mAh/g) at 1.8 V | Discharge capacity (mAh/g) at 1.5 V |
|---|---|---|---|---|---|---|---|
| Sample 5 | 499.4 | 3.225 | 236.7 | 340.1 | 439.3 | 499.1 | > 500 |
| Sample 6 | 499.9 | 3.224 | 190.6 | 269.6 | 347.8 | 404.5 | 436.8 |
| Sample 15 | 500.3 | 3.262 | 137.7 | 185.0 | 236.2 | 275.3 | 301.3 |
| Sample 16 | 82.2 | 3.400 | 34.2 | 40.9 | 45.8 | 50.9 | 56.8 |
| Sample 7 | 499.5 | 3.222 | 193.0 | 266.5 | 335.0 | 381.1 | 394.6 |
| Sample 8 | 499.9 | 3.186 | 235.9 | 353.3 | 464.0 | 499.6 | - |
| Sample 9 | 500.4 | 3.240 | 168.0 | 249.3 | 319.9 | 385.6 | - |
| Sample 10 | 500.2 | 3.189 | 247.6 | 390.4 | 473.6 | 500.1 | - |
| Sample 11 | 499.1 | 3.182 | 253.4 | 407.9 | 473.1 | > 500 | - |
| Sample 12 | 499.2 | 3.183 | 249.6 | 404.7 | 473.5 | > 500 | - |

The positive electrode active materials of Sample 5, Sample 6, Sample 15, and Sample 16 were produced under the same conditions, except for the treatment temperature. The charging voltage of the battery of Sample 15 was slightly high, while the discharge capacities thereof were small. The charge capacity and the discharge capacities of the battery of Sample 16 were small. On the other hand, the batteries of Sample 5 and Sample 6 showed low charging voltages and large discharge capacities.

The battery of Sample 7 includes a positive electrode active material produced using Co₃O₄ as the raw material of the transition metal M1. The battery of Sample 8 includes a positive electrode active material produced using LiCoO₂ as the raw material of the transition metal M1. The reducing effect on an increase of the charging voltage and the enhancing effect on the discharge capacity were achieved whether an oxide including Co alone or a double oxide was used as the raw material of the transition metal M1.

Samples 9 to 12 were produced using a different model of ball mill from the one used for Samples 5 to 8. An increase of the charging voltage was reduced and the discharge capacities were enhanced, as in Samples 5 to 8, even though the model of ball mill was changed.

For each of the batteries of Sample 11 and Sample 12, a ratio of the discharge capacity in the fourth cycle to the charge capacity in the fourth cycle was calculated as a coulombic efficiency (unit: %). The coulombic efficiencies of the batteries of Sample 11 and Sample 12 were both 100.0%.

### (Sample 13-1)

The battery of Sample 13-1 was charged at a current of 50.0 mA/g under the conditions that the maximum voltage was 3.4 V and the upper limit of the charge capacity was 600 mAh/g. Table 6A shows the charge capacity, the voltage at 500 mAh/g, and the voltage at 600 mAh/g. After a 20-minute rest period, constant-current discharging was performed at a current of 50.0 mA/g until the voltage reached 1.5 V. After that, constant-voltage discharging was performed at 1.5 V until 5 mA/g was reached or 24 hours had passed. Table 6A shows the discharge capacities at voltages of 2.2 V, 2.0 V, 1.8 V, and 1.5 V.

### (Sample 13-2)

The battery of Sample 13-1 was charged at a current of 64.7 mA/g under the conditions that the maximum voltage was 3.4 V and the upper limit of the charge capacity was 647 mAh/g. Table 6A shows the charge capacity, the voltage at 500 mAh/g, and the voltage at 600 mAh/g. After a 20-minute rest period, constant-current discharging was performed at a current of 50.0 mA/g until the voltage reached 1.5 V. After that, constant-voltage discharging was performed at 1.5 V until 5 mA/g was reached or 24 hours had passed. Table 6A shows the discharge capacities at voltages of 2.2 V, 2.0 V, 1.8 V, and 1.5 V.

**[Table 6A]**

| | Charge capacity (mAh/g) | Charging voltage (V) at 500 mAh/g | Charging voltage (V) at 600 mAh/g | Discharge capacity (mAh/g) at 2.2 V | Discharge capacity (mAh/g) at 2.0 V | Discharge capacity (mAh/g) at 1.8 V | Discharge capacity (mAh/g) at 1.5 V |
|---|---|---|---|---|---|---|---|
| Sample 13-1 | 600.2 | 3.169 | 3.171 | 583.7 | 702.9 | 800.0 | 821.6 |
| Sample 13-2 | 646.3 | 3.173 | 3.175 | 575.2 | 682.8 | 787.4 | 813.5 |

The positive electrode active materials included in the batteries of Sample 13-1 and Sample 13-2 are identical. As shown in Table 6A, an increase of the charging voltage was reduced and the discharge capacities were enhanced, as in Sample 1, although the charge-discharge test conditions were changed from the conditions for Sample 13-1 to the conditions for Sample 13-2.

### (Sample 13-3)

The battery of Sample 13-3 was charged and discharged at a current of 50.0 mA/g under the conditions that the maximum voltage was 3.4 V, the minimum voltage was 1.8 V, the upper limit of the charge-discharge capacity in the first cycle was 300 mAh/g, the upper limit of the charge-discharge capacity in the second cycle was 400 mAh/g, the upper limit of the charge-discharge capacity in the third cycle was 500 mAh/g, the upper limit of the charge-discharge capacity in the fourth cycle was 600 mAh/g, and the upper limit of the charge-discharge capacity in the fifth cycle was 700 mAh/g. The rest period between the charging process and the discharging process was 20 minutes. Table 6B shows the charge capacity in the third cycle, the voltage at 500 mAh/g in the charging in the third cycle, and the discharge capacities at voltages of 2.5 V, 2.2 V, 2.0 V, and 1.8 V in the discharging in the third cycle. Table 6C shows the charge capacity in the fifth cycle, the voltage at 700 mAh/g in the charging in the fifth cycle, and the discharge capacities at voltages of 2.5 V, 2.2 V, 2.0 V, and 1.8 V in the discharging in the fifth cycle.

**[Table 6B]**

| | Charge capacity (mAh/g) | Charging voltage (V) at 500 mAh/g | Discharge capacity (mAh/g) at 2.5 V | Discharge capacity (mAh/g) at 2.2 V | Discharge capacity (mAh/g) at 2.0 V | Discharge capacity (mAh/g) at 1.8 V |
|---|---|---|---|---|---|---|
| Sample 13-3 | 500.1 | 3.173 | 324.0 | > 500 | > 500 | > 500 |

**[Table 6C**

| | Charge capacity (mAh/g) | Charging voltage (V) at 700 mAh/g | Discharge capacity (mAh/g) at 2.5 V | Discharge capacity (mAh/g) at 2.2 V | Discharge capacity (mAh/g) at 2.0 V | Discharge capacity (mAh/g) at 1.8 V |
|---|---|---|---|---|---|---|
| Sample 13-3 | 700.4 | 3.196 | 559.6 | 683.3 | > 700 | > 700 |

As shown in Table 6B and Table 6C, the battery of Sample 13-3 showed a low charging voltage and a large discharge capacity in both the third cycle and the fifth cycle.

### (Sample 21)

The battery of Sample 20 was charged at a current of 53.3 mA/g under the conditions that the maximum voltage was 3.4 V and the upper limit of the charge capacity was 533 mAh/g. After a 20-minute rest period, constant-current discharging was performed at a current of 53.3 mA/g until the voltage reached 1.0 V. This cycle was repeated three times. Table 7A shows the charge capacity in the third cycle and the voltage at 200 mAh/g in the charging in the third cycle. Table 7A shows the discharge capacities at voltages of 2.2 V, 2.0 V, 1.8 V, and 1.5 V in the discharging in the third cycle.

### (Samples 17 to 20 and Sample 22)

The batteries of Samples 17 to 20 and Sample 22 were charged and discharged at a current of 50.0 mA/g under the conditions that the maximum voltage was 3.4 V, the minimum voltage was 1.5 V, the upper limit of the charge-discharge capacity in the first cycle was 300 mAh/g, the upper limit of the charge-discharge capacity in the second cycle was 400 mAh/g, and the upper limit of the charge-discharge capacity in the third cycle was 500 mAh/g. The rest period between the charging process and the discharging process was 20 minutes. In the case where the voltage reached 1.5 V in the discharging process before the given capacity was reached, constant-voltage discharging was performed at 1.5 V for one hour. Table 7A shows the charge capacity in the third cycle and the voltages at the given capacities in the third cycle. Table 7B shows the discharge capacities at voltages of 2.5 V, 2.2 V, 2.0 V, 1.8 V, and 1.5 V in the discharging in the third cycle.

**[Table 7A]**

| | Charge capacity (mAh/g) | Charging voltage (V) at 200 mAh/g | Charging voltage (V) at 300 mAh/g | Charging voltage (V) at 400 mAh/g | Charging voltage (V) at 500 mAh/g |
|---|---|---|---|---|---|
| Sample 21 | 240.8 | 3.368 | > 3.4 | > 3.4 | > 3.4 |
| Sample 17 | 499.8 | 3.098 | 3.214 | 3.246 | 3.259 |
| Sample 22 | 261.1 | 3.369 | > 3.4 | > 3.4 | > 3.4 |
| Sample 18 | 500.3 | 3.243 | 3.266 | 3.282 | 3.308 |
| Sample 19 | 499.9 | 3.177 | 3.245 | 3.279 | 3.310 |
| Sample 20 | 499.2 | 3.157 | 3.240 | 3.280 | 3.306 |

**[Table 7B]**

| | Discharge capacity (mAh/g) at 2.2 V | Discharge capacity (mAh/g) at 2.0 V | Discharge capacity (mAh/g) at 1.8 V | Discharge capacity (mAh/g) at 1.5 V |
|---|---|---|---|---|
| Sample 21 | 165.0 | 180.8 | 184.9 | 188.5 |
| Sample 17 | 374.3 | 406.9 | 419.4 | 429.2 |
| Sample 22 | 126.8 | 130.1 | 132.2 | 135.1 |
| Sample 18 | 201.7 | 208.1 | 211.3 | 215.7 |
| Sample 19 | 311.1 | 326.6 | 333.2 | 340.8 |
| Sample 20 | 367.7 | 385.9 | 393.9 | 403.2 |

The batteries of Sample 21 and Sample 22 reached the maximum voltage of 3.4 V at charge capacities of 240.8 mAh/g and 261.1 mAh/g, respectively. Additionally, the discharge capacities of the batteries of Sample 21 and Sample 22 were small. On the other hand, the batteries of Samples 17 to 20 showed low charging voltages and large discharge capacities.

The short processing time and the small amount of CuO are the causes of the high charging voltages and the small discharge capacities of the batteries of Sample 21 and Sample 22.

As the results for Samples 17 to 20 show, even in the case where the transition metal M1 was Cu, the reducing effect on an increase of the charging voltage and the enhancing effect on the discharge capacity were achieved, just as in the case of Co.

### (Samples 23 to 28)

The batteries of Samples 23 to 28 were charged at a current of 50.0 mA/g under the conditions that the maximum voltage was 3.4 V and the upper limit of the charge capacity was 300 mAh/g. Table 8 shows the charge capacity, the voltage at 200 mAh/g, and the voltage at 300 mAh/g. After a 20-minute rest period, constant-current discharging was performed at a current of 50.0 mA/g until 1.5 V (for Sample 26, 1.8 V). After that, constant-voltage discharging was performed at 1.5 V (for Sample 26, 1.8 V) for one hour. Table 8 shows the discharge capacities at voltages of 2.2 V, 2.0 V, 1.8 V, and 1.5 V.

**[Table 8]**

| | Charge capacity (mAh/g) | Charging voltage (V) at 200 mAh/g | Charging voltage (V) at 300 mAh/g | Discharge capacity (mAh/g) at 2.2 V | Discharge capacity (mAh/g) at 2.0 V | Discharge capacity (mAh/g) at 1.8 V | Discharge capacity (mAh/g) at 1.5 V |
|---|---|---|---|---|---|---|---|
| Sample 27 | 300.1 | 3.306 | 3.361 | 87.5 | 89.3 | 91.0 | 94.5 |
| Sample 23 | 299.5 | 3.242 | 3.244 | 159.8 | 161.0 | 162.2 | 164.6 |
| Sample 28 | 299.5 | 3.280 | 3.292 | 92.4 | 93.4 | 94.4 | 96.8 |
| Sample 24 | 299.6 | 3.262 | 3.268 | 136.9 | 138.0 | 139.1 | 141.8 |
| Sample 25 | 299.8 | 3.217 | 3.218 | 151.8 | 152.9 | 154.1 | 156.9 |
| Sample 26 | 299.4 | 3.221 | 3.224 | 148.6 | 149.5 | 150.7 | - |

The charging voltages of the batteries of Samples 23 to 26 were lower than those of the batteries of Sample 27 and Sample 28. The discharge capacities of the batteries of Sample 27 and Sample 28 were small. On the other hand, the batteries of Samples 23 to 26 showed large discharge capacities.

The low the rotation speed of the apparatus, the short processing time, and the small amount of Fe are the causes of the high charging voltages and the small discharge capacities of the batteries of Sample 27 and Sample 28.

As the results for Samples 23 to 26 show, even in the case where the transition metal M1 was Fe, the reducing effect on an increase of the charging voltage and the enhancing effect on the discharge capacity were achieved, just as in the case of Co and Cu. Moreover, Fe₂O₃ (Sample 23 and Sample 24), Fe₃O₄ (Sample 25), and FeO (Sample 26) were all able to be used as the raw material of Fe as the transition metal M1.

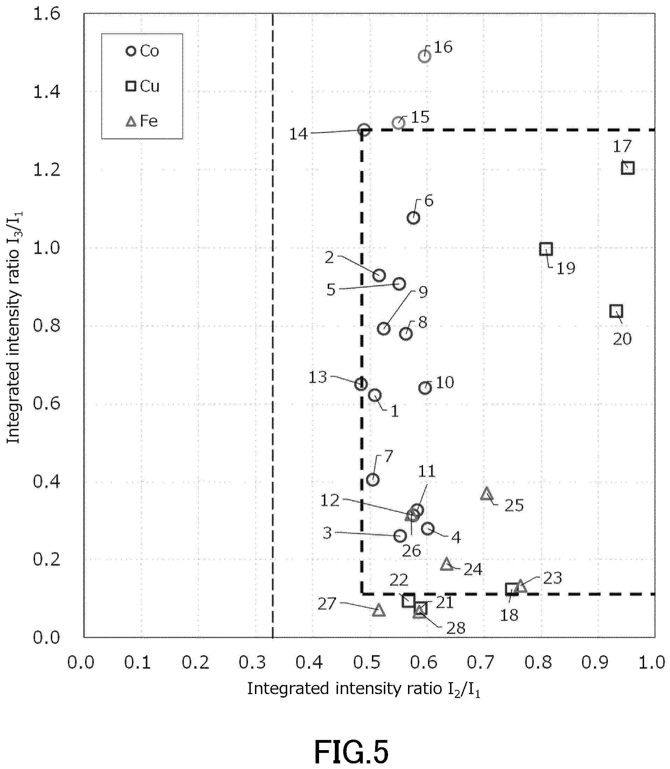

FIG. 5 is a graph on which calculation results for the integrated intensity ratios I₂/I₁ and I₃/I₁ of the positive electrode active materials of Samples 1 to 28 are plotted. The horizontal axis indicates the integrated intensity ratio I₂/I₁. The vertical axis indicates the integrated intensity ratio I₃/I₁. The numbers "1, 2, 3, ...28" respectively represent Samples 1 to 28. The integrated intensity ratio I₂/I₁ in single-crystal Li₂O is approximately 0.33.

A small integrated intensity ratio I₂/I₁ indicates a low solid solubility of the transition metal M1. A large integrated intensity ratio I₂/I₁ indicates a high solid solubility of the transition metal M1. The integrated intensity ratio I₂/I₁ of each of the batteries of Samples 1 to 13, 17 to 20, and 23 to 26 was 0.48 or more. It is thought that in these samples, dissolution of the transition metal M1 into lithium oxide to form a solid solution sufficiently progressed and the enhancing effect on the electron conductivity and the ion conductivity was sufficiently achieved.

A small integrated intensity ratio I₃/I₁ indicates a small amount of residue and/or by-product. A large integrated intensity ratio I₃/I₁ indicates a large amount of residue and/or by-product. The integrated intensity ratio I₃/I₁ of each of the batteries of Samples 1 to 13, 17 to 20, and 23 to 26 was in the range of 0.10 or more and 1.30 or less. That is, the positive electrode active materials included in these batteries included an appropriate amount of residue and/or by-product.

### INDUSTRIAL APPLICABILITY

The technique of the present disclosure is useful for batteries, such as lithium secondary batteries.

## Claims

1. A battery comprising:
a positive electrode; a negative electrode; a separator; and an electrolyte solution, wherein
the positive electrode comprises, as a positive electrode active material, a lithium oxide in which a transition metal is dissolved to form a solid solution, the lithium oxide having an antifluorite crystal structure,
the electrolyte solution comprises a solvent mixture of a fluorinated cyclic ester and an additional solvent, and
a concentration of the fluorinated cyclic ester in the electrolyte solution is 75 volume% or less.

2. The battery according to claim 1, wherein the concentration of the fluorinated cyclic ester in the electrolyte solution is 2 volume% or more and 5 volume% or less.

3. The battery according to claim 1, wherein the fluorinated cyclic ester comprises a fluorinated cyclic carbonate.

4. The battery according to claim 1, wherein the fluorinated cyclic ester comprises fluoroethylene carbonate.

5. The battery according to claim 1, wherein
the positive electrode active material has a particle shape, and
a particle of the positive electrode active material has a cross-sectional area of 0.01 µm² or more and 500 µm² or less.

6. The battery according to claim 1, wherein the negative electrode comprises lithium metal.

7. The battery according to claim 1, wherein
the positive electrode active material further comprises a transition metal oxide comprising a transition metal M2, and
in an X-ray diffraction pattern measured for the positive electrode active material using a Cu-Kα ray,
a ratio of an integrated intensity of a second diffraction peak derived from a (220) plane of the lithium oxide in a diffraction angle 20 range from 52° to 62° to an integrated intensity of a first diffraction peak derived from a (111) plane of the lithium oxide in a diffraction angle 2θ range from 30° to 40° is 0.48 or more, and
a ratio of an integrated intensity of a third diffraction peak derived from a crystal plane of the transition metal oxide in a diffraction angle 2θ range from 40° to 50° to the integrated intensity of the first diffraction peak is 0.10 or more and 1.30 or less.

8. The battery according to claim 7, wherein the positive electrode active material has a structure of a secondary particle composed of a plurality of primary particles of the lithium oxide and a plurality of primary particles of the transition metal oxide.
